Europäisches Patentamt

(19) European Patent Office

Office européen des brevets

(11) Publication number : **0 281 207 B1**

(12) **EUROPEAN PATENT SPECIFICATION**

(45) Date of publication of patent specification :
**19.02.92 Bulletin 92/08**

(21) Application number : **88200399.9**

(22) Date of filing : **01.03.88**

(51) Int. Cl.$^5$ : **G01M 17/00,** G01M 17/06

(54) **Device for moving in a horizontal direction a wheel mounted on a vehicle.**

(30) Priority : **05.03.87 NL 8700539**

(43) Date of publication of application :
**07.09.88 Bulletin 88/36**

(45) Publication of the grant of the patent :
**19.02.92 Bulletin 92/08**

(84) Designated Contracting States :
**AT BE CH DE ES FR GB GR IT LI LU NL SE**

(56) References cited :
**FR-A- 2 263 500**

(56) References cited :
**PATENT ABSTRACTS OF JAPAN, vol. 6, no.
175 (P-141)[1053], 9th September 1982; & JP -
A - 57 91439 (KOGYO GIIJUTSIN) 07-06-1982
PATENT ABSTRACTS OF JAPAN, vol. 9, no. 40
(P-336)[1763], 20th February 1985; & JP - A - 59
180 447 (KOGYO GIIJUTSUIN) 13-10-1984**

(73) Proprietor : **Meijer, Thomas Harke Daniel
Stadsweg 123
NL-9792 RE Ten Post (NL)**

(72) Inventor : **Meijer, Thomas Harke Daniel
Stadsweg 123
NL-9792 RE Ten Post (NL)**

(74) Representative : **Barendregt, Drs. F. et al
EXTERPATENT B.V. P.O. Box 90649
NL-2509 LP 's-Gravenhage (NL)**

# Description

The invention relates to a device for moving in a horizontal direction a wheel mounted on a vehicle, comprising a table which can be moved in a horizontal plane and on which the vehicle wheel can be placed.

Such a device is known in practice and is used for, for example, checking the play in the steering swivel of a car. Two such devices are normally used, one for each of the two front wheels of the car. In the known device the table can be moved in two directions at right angles to each other, viz. in the lengthwise direction of the car and in the transverse direction. The movable table is driven by hydraulic or pneumatic cylinders. The known device is intended for setting up in a fixed position, for example in car testing stations.

Since the turntable can be moved only in two directions at right angles to each other, only the play in the steering swivel, and not the play in the steering connecting rod can be checked with the known device.

The object of the invention is to provide a device for moving in a horizontal direction a wheel mounted on a vehicle, having a simple design by means of which both the play in the steering swivel and the play in the steering connecting rod can easily be checked.

This object is achieved according to the invention by a device of the above-mentioned type which is characterized in that the table is an essentially rectangular turntable which is rotatably mounted on a support by means of a pivot bearing unit located in the area near one short rectangle side of the turntable, the axis of rotation of the turntable being essentially perpendicular to the plane of the turntable, the turntable being further provided with a supporting roller located in the area near the other rectangle side of the turntable, the supporting roller being adapted to rest on the support having a central axis which intersects the axis of rotation of the turntable.

Using the device according to the invention it is possible to make a wheel mounted on a vehicle to move transverse to the lengthwise direction of the vehicle, by driving the wheel in lengthwise direction onto the turntable and placing the wheel on the turntable between the centre of rotation of the turntable and the supportion roller, and turning the turntable. In this way, if the wheel is one of the steered front wheels of the vehicle, the play in the steering swivel of the wheel in question can be checked. It is also possible to check the play in the steering connecting rod of the vehicle by placing the two steered front wheels each on a turntable above the centre of rotation and turning the two turntables, so that the wheels placed thereon rotate about a vertical axis. Through the essentially rectangular shape of the turntable, the device according to the invention can be made relatively narrow, which makes it possible to place the device on a track of a car hoist normally used in garage, or to build it into such a hoist.

From FR-A-2 263 500 a test stand with driven rolls is known which can be used to test the play of steering parts. The rolls are mounted in four boxes each with a central turning axis. The construction of the boxes is however different from the device according to the invention and also their use is different.

The turntable is expediently provided with means for turning the turntable relative to the support. The turntable can, for example, be provided with a projecting pin on which a lever can be mounted. It is, however, also possible to fit a hydraulic or pneumatic cylinder between the turntable and the support, by means of which the turntable is turned relative to the support when the cylinder is operated.

In order to make it possible to fix one of the two wheels when two devices are used, with a front wheel of a vehicle being placed on each of the two devices, it is preferable to have means for fixing the turntable relative to the support.

The device is preferably designed as a mobile unit, so that the device can be used in different places, for example on a car hoist, in a lubrication pit or in other places, such as a road or car park.

In a practical embodiment of the device the support is for this purpose made up of a bedplate running parallel to the turntable.

The invention will now be explained in greater detail with reference to an example of an embodiment shown in the drawings, in which:

Fig. 1 is a longitudinal section of a preferred embodiment of the device according to the invention; and

Fig. 2 is a plan view of the device of Fig. 1.

The preferred embodiment, shown in the drawings, of a device for moving in a horizontal direction a wheel mounted on a vehicle comprises a bedplate 1 and a turntable 2. The turntable is essentially rectangular in shape. In the righthand area 3 in the figures near the short rectangle side 4 of the turntable, the turntable 2 rests via a pivot bearing unit 5 on the bedplate 1. In the lefthand area 6 in the figures near the other short rectangle side 7, the turntable 2 is provided with a supporting roller 8 which can rest on the bedplate when the turntable 2 is bearing the weight of a wheel of a vehicle. The central axis 9 of the supporting roller intersects the centre of rotation 10 of the turntable 2 so that, despite said supporting roller, the turntable can turn easily relative to the bedplate.

In order to permit rotation of the turntable 2 relative to the bedplate 1, the turntable is provided with an extension piece 11 with a projecting pin 12. It is possible to place, for example, a tubular lever 13 on this pin 12.

It is, however, also possible to fit a hydraulic or pneumatic cylinder between the turntable 2 and the bedplate 1 and to turn the turntable relative to the bedplate by means of this cylinder.

In order to limit the stroke of the turntable 2, two stops 14 and 15 for the supporting roller 8 are provided on the bedplate 1. The stroke which the turntable 2 can make here is ample for the purpose for which the device according to the invention is designed. Near the short rectangle side 7 the turntable is provided with a downward-running extension piece 16, by means of which a vehicle wheel can easily be driven onto the turntable. On the short rectangle side 4 and on the two long rectangle sides, the turntable is provided with raised edges 17, 18 and 19, which are to prevent the wheel from running off the turntable, and which also serve to reinforce the turntable.

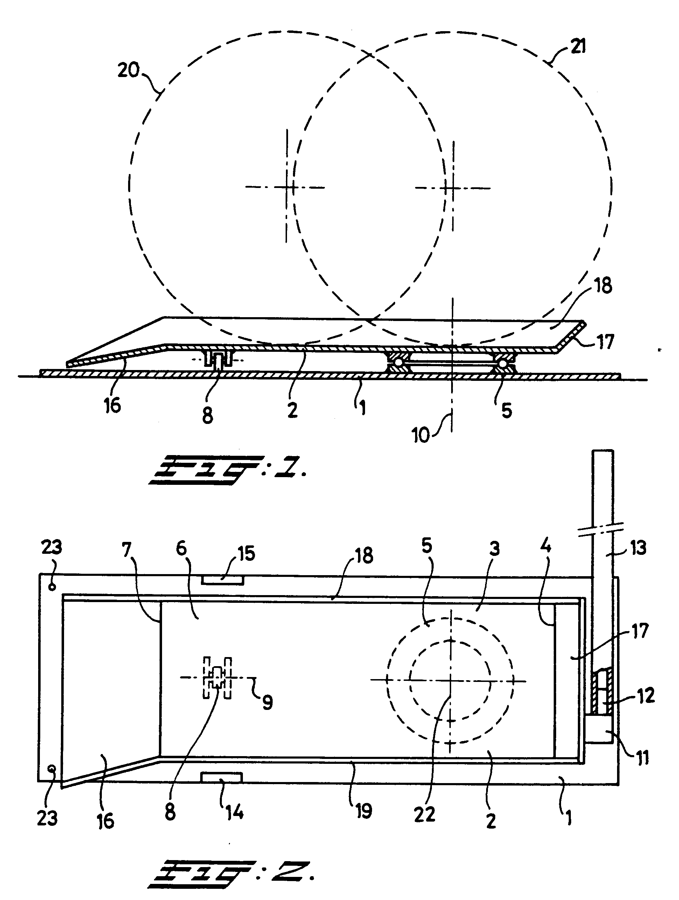

When the play in the steering swivel and/or the steering connecting rod of a car has to be checked, two of the above-mentioned devices will normally be placed on a car hoist or next to a lubrication pit or in front of the front wheels of the car. Each front wheel is then driven onto a turntable 2. When the play in the steering swivel has to be checked, the front wheels will be positioned approximately in the position on the turntable 2 shown by 20 in Fig. 1. If the turntables 2 are turned by means of the levers 13, the front wheels are moved apart or towards each other. The play in the steering swivel can easily be checked at the same time.

If the play in the steering connecting rod has to be checked, the front wheels are placed on the turntable 2 in the position indicated by 21 in Fig. 1, i.e. above the centre of rotation 22. Through rotation of a turntable by means of a lever 13, the two front wheels are rotated about a vertical axis, and the play in the steering connecting rod can easily be checked without a second person having to be in the car to turn the steering wheel.

The bedplate 1 can be provided with means for fixing the bedplate on a base. The bedplate can be provided with, for example, bolt holes 23.

In certain cases it will be necessary to fix a front wheel placed on a device according to the invention during the carrying out of the check. For this purpose, the device can be provided with fixing means, not shown here, to fix the turntable 2 relative to the bedplate 1.

Other embodiments of the device, not shown here, are possible within the scope of the invention. For example, the pivot bearing unit can be designed as a slide bearing, axial ball or roller bearing, a series of radial bearings which are placed in a circle and the central axes of which intersect each other in a common point etc. If the pivot bearing unit has a sufficiently large diameter, it is possible to dispense with the additional supporting roller. The turntable can also be designed in different ways.

With the above-described device according to the invention it is possible to check both the play in the steering swivel and the play in the steering connecting rod of a vehicle such as a car with a simple and relatively cheap device in different places.

## Claims

1. Device for moving in a horizontal direction a wheel mounted on a vehicle, comprising a table (2) which can be moved in a horizontal plane and on which the vehicle wheel can be placed, characterized in that the table is an essentially rectangular turntable (2) which is rotatably mounted on a support (1) by means of a pivot bearing unit (5) located in the area (3) near one short rectangle side (4) of the turntable, the axis of rotation (10) of the turntable being essentially perpendicular to the plane of the turntable, the turntable being further provided with a supporting roller (8) located in the area (6) near the other rectangle side (7) of the turntable, the supporting roller being adapted to rest on the support and having a central axis (9) which intersects the axis of rotation (10) of the turntable.

2. Device according to Claim 1, characterized in that the turntable (2) is provided with means (11, 12, 13) for turning the turntable relative to the support (1).

3. Device according to Claim 2, characterized in that the turntable (2) is provided with a projecting pin (12) on which a lever (13) can be mounted.

4. Device according to Claim 2, characterized in that a hydraulic or pneumatic cylinder is fitted between the turntable (2) and the support (1).

5. Device according to one of Claims 1-4, characterized in that means are present to fix the turntable (2) relative to the support (1).

6. Device according to one of Claims 1-5, characterized in that the device is designed as a mobile unit.

7. Device according to one of Claims 1-6, characterized in that the support consists of a bedplate (1) running essentially parallel to the turntable (2).

## Patentansprüche

1. Vorrichtung zur horizontalen Bewegung eines Rads an einem Kraftfahrzeug mit einem in einer horizontalen Ebene beweglichen Tisch (2), auf welchem das Fahrzeugrad plazierbar ist, dadurch gekennzeichnet, daß der Tisch als im wesentlichen rechteckiger Schwenktisch (2) ausgebildet ist, welcher mittels einer in dem einer kurzen Rechteckseite (4) des Schwenktisches benachbarten Bereich (3) angeordneten Drehlagereinheit (5) drehbar auf einem Gestell (1) montiert ist, wobei die Drehachse (10) des Schwenktisches im wesentlichen senkrecht zur Ebene des Schwenktisches verläuft, und daß der Schwenktisch ferner mit einer in dem der anderen Rechteckseite (7) des Schwenktisches benachbarten Bereich (6) vorhandenen Stützrolle (8) versehen ist, die so ausgeführt ist, daß sie auf dem Gestell ruht und ihre Mittelachse (9) die Drehachse (10) des Schwenktisches schneidet.

2. Vorrichtung nach Anspruch 1, dadurch gekennzeichnet, daß der Schwenktisch (2) mit Mitteln (11, 12, 13) versehen ist zum Drehen des Schwenktischs relativ zum Gestell (1).

3. Vorrichtung nach Anspruch 2, dadurch gekennzeichnet, daß am Schwenktisch (2) ein vorstehender Stift (12) vorhanden ist, auf dem ein Hebel (13) anordenbar ist.

4. Vorrichtung nach Anspruch 2, dadurch gekennzeichnet, daß ein hydraulischer oder pneumatischer Zylinder zwischen dem Schwenktisch (2) und dem Gestell (1) eingebaut ist.

5. Vorrichtung nach einem der Ansprüche 1-4, dadurch gekennzeichnet, daß Mittel vorhanden sind, um den Schwenktisch (2) relativ zum Gestell (1) zu fixieren.

6. Vorrichtung nach einem der Ansprüche 1-5, dadurch gekennzeichnet, daß die Vorrichtung als fahrbare Einheit ausgelegt ist.

7. Vorrichtung nach einem der Ansprüche 1-6, dadurch gekennzeichnet, daß das Gestell als Auflageplatte (1) ausgebildet ist, welche im wesentlichen parallel zum Schwenktisch (2) verläuft.

## Revendications

1. Dispositif pour déplacer dans une direction horizontale une roue montée sur un véhicule, comportant un plateau (2) mobile dans un plan horizontal et sur lequel la roue du véhicule peut être placée, caractérisé en ce que le plateau est un plateau tournant essentiellement rectangulaire (2) monté à rotation sur un support (1) au moyen d'un ensemble d'appui pivotant (5) situé dans la zone (3) proche de l'un (4) des petits côtés du rectangle du plateau tournant, plateau tournant dont l'axe de rotation (10) est essentiellement perpendiculaire à son plan, et qui est également muni d'une roulette de support (8) située dans la zone (6) proche de l'autre petit côté (7) du rectangle du plateau tournant, la roulette de support étant adaptée pour reposer sur le support et possédant un axe central (9) qui coupe l'axe de rotation (10) du plateau tournant.

2. Dispositif selon la revendication 1, caractérisé en ce que le plateau tournant (2) est pourvu de moyens (11, 12, 13) destinés à le faire tourner par rapport au support (1).

3. Dispositif selon la revendication 2, caractérisé en ce que le plateau tournant (2) est pourvu d'une broche saillante (12) sur laquelle un levier (13) peut être monté.

4. Dispositif selon la revendication 2, caractérisé en ce qu'un vérin hydraulique ou pneumatique est interposé entre le plateau tournant (2) et le support (1).

5. Dispositif selon l'une des revendications 1 à 4, caractérisé en ce qu'il est prévu des moyens pour fixer le plateau tournant (2) par rapport au support (1).

6. Dispositif selon l'une des revendications 1 à 5, caractérisé en ce qu'il est conçu sous la forme d'un ensemble mobile.

7. Dispositif selon l'une des revendications 1 à 6, caractérisé en ce que le support consiste en une plaque d'assise (1) qui s'étend essentiellement parallèlement au plateau tournant (2).

_Fig: 1._

_Fig: 2._